# FASCICULE DE BREVET EUROPEEN

(11) **EP 4 057 039 B1**
(45) Date de publication et mention de la délivrance du brevet: **26.07.2023**
(21) Numéro de dépôt: 22161009.0
(22) Date de dépôt: 09.03.2022
(51) Int. Cl.: G02B 6/42

(54) **DISPOSITIF OPTOÉLECTRONIQUE COMPORTANT UN INTERPOSEUR PHOTONIQUE ACTIF AUQUEL SONT CONNECTÉES UNE PUCE MICROÉLECTRONIQUE ET UNE PUCE DE CONVERSION ÉLECTRO-OPTIQUE**
OPTOELEKTRONISCHE VORRICHTUNG MIT EINEM AKTIVEN PHOTONISCHEN ZWISCHENTRÄGER, AN DEN EIN MIKROELEKTRONISCHER CHIP UND EIN ELEKTROOPTISCHER UMWANDLUNGSCHIP ANGESCHLOSSEN SIND
OPTOELECTRONIC DEVICE COMPRISING AN ACTIVE PHOTONIC SPACER TO WHICH A MICROELECTRONIC CHIP AND AN ELECTRO-OPTICAL CONVERSION CHIP ARE CONNECTED

(30) Priorité: 11.03.2021 FR 2102420
(43) Date de publication de la demande: 14.09.2022
(73) Titulaire: COMMISSARIAT À L'ÉNERGIE ATOMIQUE ET AUX ÉNERGIES ALTERNATIVES, 75015 Paris (FR)
(72) Inventeur: CHARBONNIER, Jean, 38054 Grenoble cedex 9 (FR); BERNABE, Stéphane, 38054 Grenoble cedex 9 (FR); THONNART, Yvain, 38054 Grenoble cedex 9 (FR)
(74) Mandataire: INNOV-GROUP

(56) Documents cités:
- WO-A1-2018/098146
- US-A1- 2019 333 905
- SNYDER BRADLEY ET AL: "Packaging and Assembly Challenges for 50G Silicon Photonics Interposers", 2018 OPTICAL FIBER COMMUNICATIONS CONFERENCE AND EXPOSITION (OFC), OSA, 11 mars 2018 (2018-03-11), pages 1-3, XP033357410,
- FRANKE JÖRG ET AL: "Electronic module assembly", CIRP ANNALS, ELSEVIER BV, NL, CH, FR, vol. 70, no. 2, 1 janvier 2021 (2021-01-01), pages 471-493, XP086757453, ISSN: 0007-8506, DOI: 10.1016/J.CIRP.2021.05.005 [extrait le 2021-07-09]

## Description

### DOMAINE TECHNIQUE

Le domaine de l'invention est celui des dispositifs optoélectroniques comportant un interposeur photonique actif, c'est-à-dire un interposeur comportant un circuit photonique à composants optiques actifs, et auquel sont assemblées mécaniquement et connectées électriquement des puces microélectroniques. L'invention trouve une application notamment dans le domaine du calcul haute performance.

### ÉTAT DE LA TECHNIQUE ANTÉRIEURE

Les interposeurs sont des dispositifs monoblocs auxquels sont assemblées mécaniquement et connectées électriquement des puces microélectroniques. De telles puces peuvent être des circuits intégrés de type CMOS, et peuvent comporter des composants électroniques tels que des transistors, résistances, condensateurs etc... Il peut s'agir de puces de calcul, de puces mémoires, de puces de conversion électro-optique, entre autres. De tels interposeurs peuvent être réalisés à base de silicium.

Ces interposeurs peuvent être dits photoniques lorsqu'ils comportent un circuit photonique formé de composants optiques passifs (guides d'onde, multiplexeurs...) et éventuellement des composants optiques actifs (modulateurs, diodes...). Il est connu qu'un composant optique est dit actif lorsqu'il comporte au moins un terminal électrique. Lorsqu'il s'agit d'un interposeur photonique actif, au moins une puce microélectronique de conversion électro-optique assure l'interface électronique entre une autre puce microélectronique et les composants optiques actifs. L'article "Packaging and Assembly Challenges for 50G Silicon Photonics Interposers" de Snyder Bradley et.al, 2018 Optical fiber communications Conférence and Exposition (ofc), 11-03-2018, pages 1-3, présente un exemple de dispositif connu fondé sur un interposeur photonique auquel sont connectées des puces microélectroniques et opto-électroniques.

L'article de Thonnart et al. intitulé POPSTAR: a Robust Modulor Optical NoC Architecture for Chiplet-based 3D Integrated Systems*,* décrit un exemple de dispositif optoélectronique comportant un interposeur photonique actif à base de silicium, dans lequel s'étend un circuit photonique comportant des composants optiques actifs (de type modulateurs, filtres ou photodiodes). Des puces de calcul et des puces de conversion électro-optique sont assemblées et connectées à l'interposeur photonique à niveau de la face supérieure de ce dernier. Cependant, il existe un besoin d'améliorer les performances d'un tel dispositif optoélectronique.

### EXPOSÉ DE L'INVENTION

L'invention a pour objectif de remédier au moins en partie aux inconvénients de l'art antérieur, et plus particulièrement de proposer un dispositif optoélectronique, à interposeur photonique actif, présentant des performances améliorées.

Pour cela, l'objet de l'invention est un dispositif optoélectronique comportant :
- un interposeur photonique, présentant une face supérieure et une face opposée inférieure, réalisé à base de silicium, et comportant : un circuit photonique contenant au moins un composant optique actif, et une couche supérieure d'interconnexion, définissant la face supérieure, et comportant au moins une première portion conductrice supérieure de commande ;
- au moins une première puce microélectronique, assemblée à la face supérieure et connectée à la première portion conductrice supérieure de commande, destinée à transmettre ou recevoir un signal électrique à une deuxième puce microélectronique ;
- la deuxième puce microélectronique, dite de conversion électro-optique, assemblée et connectée à l'interposeur photonique, lequel assure la connexion électrique de la deuxième puce microélectronique au composant optique actif d'une part et à la première puce microélectronique d'autre part.

Selon l'invention, l'interposeur photonique comporte : une couche inférieure d'interconnexion, définissant la face inférieure, comportant au moins une première portion conductrice inférieure de commande, et des premières portions conductrices inférieures intermédiaires ; au moins un via traversant silicium connectant directement la première portion conductrice supérieure de commande à la première portion conductrice inférieure de commande ; des vias conducteurs connectant les premières portions conductrices inférieures intermédiaires au composant optique actif. De plus, la deuxième puce microélectronique est assemblée à la face inférieure, et est connectée à la première portion conductrice inférieure de commande d'une part, et aux premières portions conductrices inférieures intermédiaires d'autre part.

Certains aspects préférés mais non limitatifs de ce dispositif optoélectronique sont les suivants.

L'interposeur photonique peut comporter un empilement de couches, dont une couche épaisse de silicium et une couche optique dans lequel est formé le circuit photonique, la couche épaisse étant située du côté de la face supérieure et la couche optique étant située du côté de la face inférieure.

L'interposeur photonique peut comporter une couche diélectrique réalisée en un oxyde de silicium, et située entre et au contact de la couche épaisse et de la couche optique.

L'interposeur photonique peut comporter des premières portions conductrices inférieures d'alimentation situées au niveau de la face inférieure et connectées à une source électrique d'alimentation de la première puce microélectronique, et des portions conductrices supérieures d'alimentation situées au niveau de la face supérieure et connectées aux premières portions conductrices inférieures d'alimentation par des vias traversants silicium. Et la première puce microélectronique peut comporter des portions conductrices d'alimentation connectées aux portions conductrices supérieures d'alimentation.

L'interposeur photonique peut comporter des deuxièmes portions conductrices inférieures d'alimentation situées au niveau de la face inférieure et connectées à une source électrique d'alimentation de la deuxième puce microélectronique, et des deuxièmes portions conductrices intermédiaires d'alimentation situées au niveau de la face inférieure et connectées aux deuxièmes portions conductrices inférieures d'alimentation. Et la deuxième puce microélectronique peut comporter des portions conductrices d'alimentation connectées aux deuxièmes portions conductrices intermédiaires d'alimentation.

L'interposeur photonique peut comporter une ou plusieurs couches de redistribution, comportant des lignes conductrices et des vias conducteurs, situées entre et au contact d'une couche inférieure diélectrique et de la couche inférieure d'interconnexion, la couche de redistribution assurant la connexion électrique entre les deuxièmes portions conductrices intermédiaires d'alimentation et les deuxièmes portions conductrices inférieures d'alimentation.

Le composant optique actif du circuit photonique peut être choisi parmi un modulateur optique, un filtre optique et une photodiode.

Le dispositif optoélectronique peut comporter des guides d'onde externes couplés optiquement avec le circuit photonique de l'interposeur photonique.

Le dispositif optoélectronique peut comporter une couche d'encapsulation s'étendant sur la face supérieure de l'interposeur photonique et venant au contact de la première puce microélectronique.

L'interposeur photonique peut comporter une épaisseur, entre ses faces inférieure et supérieure, inférieure ou égale à 200µm.

Le dispositif optoélectronique peut comporter une pluralité de vias traversant silicium connectant directement la première portion conductrice supérieure de commande à la première portion conductrice inférieure de commande, les premières portions conductrices supérieures de commande étant connectées à la première puce microélectronique par des plots supérieurs d'interconnexion et les premières portions conductrices inférieures de commande étant connectées à la deuxième puce microélectronique par des plots inférieurs d'interconnexion, les plots supérieurs d'interconnexion et les plots inférieurs d'interconnexion étant agencés avec un pas inférieur ou égal à 40µm.

La deuxième puce microélectronique peut être assemblée à l'interposeur photonique au moyen de plots inférieurs d'interconnexion, ces derniers étant au contact de la deuxième puce microélectronique et de l'interposeur photonique.

L'interposeur photonique peut reposer sur un support d'alimentation par l'intermédiaire de plots d'alimentation dont l'épaisseur est supérieure à celle de la deuxième puce microélectronique.

L'invention porte également sur un procédé de fabrication d'un dispositif optoélectronique selon l'une quelconque des caractéristiques précédentes, comportant les étapes suivantes :
- fourniture d'un substrat SOI, comportant une couche épaisse de silicium, une couche diélectrique en un oxyde de silicium, et une couche mince de silicium ;
- réalisation d'une couche optique à partir de la couche mince ;
- réalisation de vias traversants silicium, dans des ouvertures non traversantes s'étendant au travers de la couche optique, de la couche diélectrique, et au travers d'une partie de la couche épaisse ;
- réalisation d'une couche inférieure diélectrique s'étendant sur et au contact de la couche optique ;
- réalisation de la couche inférieure d'interconnexion sur une couche inférieure diélectrique ;
- assemblage d'un premier substrat-poignée par collage direct sur la couche inférieure d'interconnexion ;
- amincissement de la couche épaisse, de manière à rendre débouchant les vias traversants silicium ;
- réalisation de la couche supérieure d'interconnexion, dans des portions conductrices sont au contact des vias traversants silicium ;
- retrait du premier substrat-poignée.

Le procédé de fabrication peut comporter les étapes suivantes :
- avant le retrait du premier substrat-poignée, assemblage de la première puce microélectronique à la couche supérieure d'interconnexion, et dépôt d'une couche d'encapsulation recouvrant la face supérieure ;
- assemblage d'un deuxième substrat-poignée à une face libre plane formée par la première puce microélectronique et la couche d'encapsulation, et retrait du premier substrat-poignée ;
- retrait du deuxième substrat-poignée ;
- assemblage de la deuxième puce microélectronique.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1 est une vue schématique et partielle, en coupe transversale, d'un dispositif optoélectronique comportant un interposeur photonique actif selon un mode de réalisation ;
la figure 2 est une vue détaillée, schématique et partielle, en coupe transversale, du dispositif optoélectronique illustré sur la fig.1 ;
les figures 3A et 3B sont des vues schématiques et partielles, en vue de dessus, de différentes parties du dispositif optoélectronique illustré sur la fig.1, montrant plus particulièrement le circuit photonique (fig.3A) et les portions conductrices (fig.3B) ;
les figures 4A à 4L sont des vues schématiques et partielles, en coupe transversale, illustrant différentes étapes d'un procédé de fabrication d'un dispositif optoélectronique similaire à celui illustré sur la fig.1.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

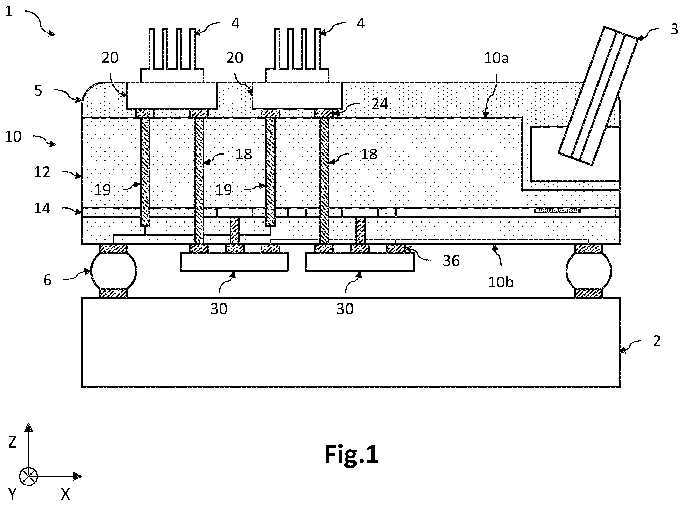

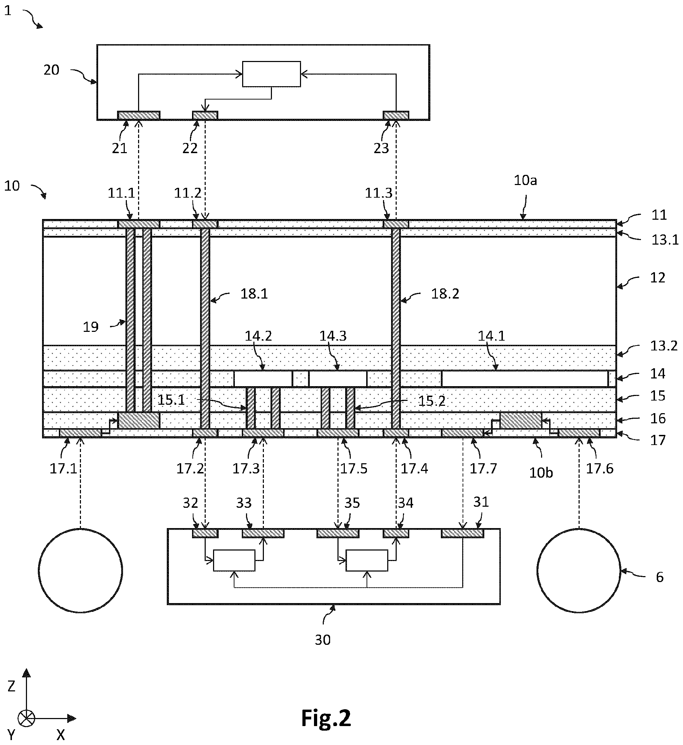

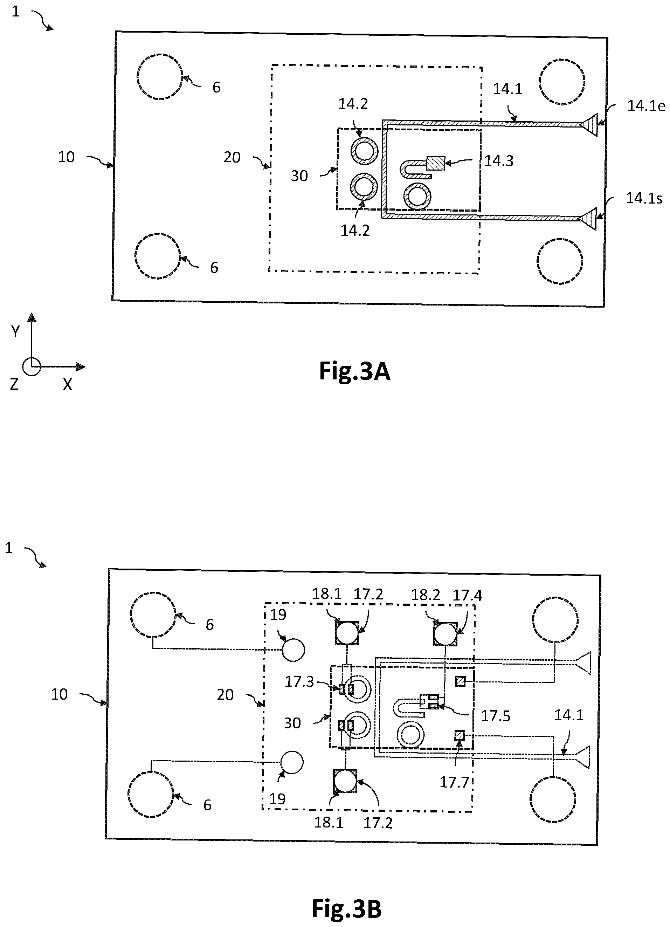

La figure 1 est une vue schématique et partielle, en coupe transversale, d'un dispositif optoélectronique 1 selon un mode de réalisation. La figure 2 est une vue détaillée du dispositif optoélectronique 1 illustré sur la fig.1 (où seule une puce microélectronique 20 est illustrée), et les figures 3A et 3B sont des vues de dessus de différentes parties du dispositif optoélectronique 1 illustré sur la fig.2.

D'une manière générale, le dispositif optoélectronique 1 comporte des puces microélectroniques 20, 30 assemblées et connectées l'une à l'autre par le biais d'un interposeur photonique 10, et ici au moins une première puce microélectronique 20 connectée à au moins une deuxième puce microélectronique dite de conversion électro-optique 30. Le dispositif optoélectronique 1 peut être destiné au calcul haute performance, voire être utilisé dans le domaine des commutateurs Ethernet pour des applications datacom de transmission entre dispositifs par fibre optique.

On définit ici et pour la suite de la description un repère direct tridimensionnel orthogonal XYZ, où les axes X et Y forment un plan parallèle au plan principal de l'interposeur photonique 10, et où la direction +Z est orientée de la puce de conversion 30 vers la puce microélectronique 20. Dans la suite de la description, les termes « inférieur » et « supérieur » s'entendent comme étant relatifs à un positionnement croissant lorsqu'on s'éloigne de la puce de conversion 30 suivant la direction +Z.

L'interposeur photonique 10 est un dispositif monobloc sur lequel plusieurs puces microélectroniques 20, 30 sont assemblées mécaniquement, et qui assure la connexion électrique des puces microélectroniques 20, 30 entre elles. Il est dit photonique et actif, dans la mesure où il comporte un circuit photonique 14.1 contenant au moins un composant optique actif tel qu'un modulateur optique (par exemple à base d'un interféromètre de Mach-Zehnder ou d'un anneau résonant), un filtre optique accordable ou une photodiode. Enfin, il s'agit d'un interposeur silicium dans la mesure où il est réalisé à base de silicium. Autrement dit, il est réalisé majoritairement en silicium ou en un matériau contenant du silicium, (ex : SOI)

Parmi les puces microélectroniques, le dispositif optoélectronique 1 comporte *a minima* une première puce microélectronique 20 destinée à transmettre ou recevoir un signal électrique vis-à-vis de la deuxième puce microélectronique de conversion électro-optique 30. Cette puce microélectronique 20 est dite *host chip* en anglais, et peut être un microprocesseur, une mémoire de type à haute bande passante (HBM), un circuit logique programmable (FPGA), un circuit spécifique ASIC, entre autres. La puce microélectronique 30 est connectée électriquement au composant optique actif 14.2, et donc également à la première puce microélectronique 20. Dans cet exemple, l'interposeur photonique 10 comporte ici un circuit photonique 14.1 contenant un modulateur optique 14.2 et une photodiode 14.3, ces deux composants optiques étant ici connectés à la même puce de conversion 30.

L'interposeur photonique 10 est donc un dispositif monobloc présentant une première face, dite face supérieure 10a, et une deuxième face opposée, dite face inférieure 10b. Les faces supérieure 10a et inférieure 10b présentent chacune une surface plane permettant l'assemblage mécanique avec les puces microélectroniques 20, 30.

Il est formé d'un empilement de couches réalisées majoritairement en silicium ou en un matériau comportant du silicium. Dans cet exemple, il est en particulier réalisé à partir d'un substrat SOI (*Silicon On Insulator,* en anglais). Il comporte ainsi, de haut en bas :
- une couche supérieure d'interconnexion 11, qui définit la face supérieure 10a et par laquelle la puce microélectronique 20 est assemblée et connectée à l'interposeur photonique 10 ;
- une couche diélectrique 13.1, de préférence réalisée à base d'un oxyde, nitrure ou oxynitrure de silicium ;
- une couche épaisse 12 en silicium,
- une couche diélectrique 13.2, ici réalisée en un oxyde de silicium (BOX, pour *Buried Oxide,* en anglais),
- une couche optique 14 contenant le circuit photonique 14.1 formé d'au moins un guide d'onde intégré, et comportant au moins un composant optique actif (ici un modulateur optique 14.2 et une photodiode 14.3) ;
- une couche inférieure diélectrique 15, de préférence réalisée à base d'un oxyde, nitrure ou oxynitrure de silicium ;
- une couche de redistribution électrique 16, contenant des vias conducteurs et lignes conductrices ;
- une couche inférieure d'interconnexion 17, formée de plots métalliques, qui définit la face inférieure 10b et par laquelle la puce de conversion 30 est assemblée et connectée à l'interposeur photonique 10.

Dans cet exemple, l'interposeur photonique 10 comporte la couche de redistribution 16 située à proximité de la face inférieure 10b. Il peut également comporter une couche de redistribution située à proximité de la face supérieure 10a, entre la couche supérieure d'interconnexion 11 et la couche épaisse 12, voire intégrée à la couche supérieure d'interconnexion 11. En variante encore, il peut ne pas comporter de couche de redistribution, en particulier lorsque les puces microélectroniques 20, 30 ne sont pas alimentées électriquement par l'intermédiaire de l'interposeur photonique 10 mais par le biais d'une connexion filaire (*wire bonding,* en anglais).

La couche supérieure d'interconnexion 11 s'étend ici sur la couche diélectrique 13.1, elle même au contact de la couche épaisse 12 de silicium, et définit la face supérieure 10a. Elle est formée ici de portions conductrices distinctes, réalisées en au moins un matériau électriquement conducteur, par exemple de l'or, titane, cuivre, etc..., séparées les unes des autres dans le plan XY par un matériau diélectrique, par exemple un oxyde, nitrure ou oxynitrure de silicium. D'autres matériaux diélectriques peuvent être utilisés, tels qu'un oxyde d'hafnium ou d'aluminium, voire un nitrure d'aluminium, entre autres. La face supérieure 10a est ici formée par les portions conductrices et par le matériau diélectrique.

Les portions conductrices sont ici des portions conductrices 11.1 d'alimentation destinées à assurer l'alimentation électrique de la puce microélectronique 20 située sur la face supérieure 10a, et d'au moins une portion conductrice 11.2, 11.3 de commande destinée à assurer la connexion électrique entre la puce microélectronique 20 et la puce de conversion 30. Dans cet exemple, à titre purement illustratif, la couche supérieure d'interconnexion 11 comporte :
- des premières portions conductrices 11.1 d'alimentation de la puce microélectronique 20,
- des premières portions conductrices supérieures 11.2 de commande, connectées à la puce de conversion 30 ici par un via traversant silicium 18.1 et par les portions 17.2 et 32, et
- des deuxièmes portions conductrices supérieures 11.3 de commande, connectées à la puce de conversion 30 ici par un via traversant silicium 18.2 et par les portions 11.3 et 34.

L'interposeur photonique 10 comporte une couche inférieure d'interconnexion 17, qui s'étend ici au contact de la couche de redistribution électrique 16, et définit la face inférieure 10b. Elle est formée ici de portions conductrices distinctes, réalisées en au moins un matériau électriquement conducteur, par exemple de l'or, titane, cuivre, etc..., séparées les unes des autres par un matériau diélectrique, par exemple un oxyde, nitrure ou oxynitrure de silicium, entre autres. La face inférieure 10b est donc formée par les portions conductrices et par le matériau diélectrique.

Les portions conductrices sont ici des portions conductrices d'alimentation destinées à assurer l'alimentation électrique de la puce microélectronique 20 située sur la face supérieure 10a, des portions conductrices d'alimentation destinées à assurer l'alimentation électrique de la puce de conversion 30 située sur la face inférieure 10b, d'au moins une portion conductrice de commande et de portions conductrices intermédiaires destinées à assurer la connexion électrique entre la puce microélectronique 20 et le composant optique via la puce de conversion 30. Dans cet exemple, à titre purement illustratif, la couche inférieure d'interconnexion 17 comporte :
- des premières portions conductrices inférieures 17.1 d'alimentation de la puce microélectronique 20,
- des deuxièmes portions conductrices inférieures 17.6 d'alimentation et des deuxièmes portions conductrices inférieures intermédiaires 17.7 pour l'alimentation électrique de la puce de conversion 30,
- des premières portions conductrices inférieures 17.2 de commande et des premières portions conductrices inférieures intermédiaires 17.3 pour la connexion entre la puce microélectronique 20 et le modulateur optique 14.2, via la puce de conversion 30 ;
- des deuxièmes portions conductrices inférieures 17.4 de commande et des deuxièmes portions conductrices inférieures intermédiaires 17.5 pour la connexion entre la puce microélectronique 20 et la photodiode 14.3, via la puce de conversion 30.

L'interposeur photonique 10 comporte la couche épaisse 12 en silicium, qui s'étend ici sous et au contact de la couche supérieure d'interconnexion 11. Cette couche est issue d'un substrat SOI. Elle participe à assurer la tenue mécanique du dispositif optoélectronique 1, ici avec la puce microélectronique 20 et la couche d'encapsulation 5, comme décrit par la suite. Elle peut présenter une épaisseur de préférence inférieure à 200µm, par exemple de l'ordre d'une centaine de microns, par exemple égale à 100µm environ. Une couche diélectrique 13.1, réalisée par exemple en un oxyde de silicium, assure l'isolation électrique de la couche supérieure d'interconnexion 11 avec la couche épaisse 12 en silicium.

L'interposeur photonique 10 comporte la couche diélectrique 13.2, qui s'étend ici sous et au contact de la couche épaisse 12 de silicium. Elle est réalisée ici en un oxyde de silicium, et correspond à la couche d'oxyde enterré (BOX) du substrat SOI. Elle participe à former la gaine de bas indice de réfraction qui entoure le circuit photonique 14.1.

L'interposeur photonique 10 comporte la couche optique 14, qui s'étend ici sous et au contact de la couche diélectrique 13.2. Elle est dite optique dans le sens où elle comporte le circuit photonique 14.1, lequel est formé par un ou plusieurs guides d'onde. Les guides d'onde sont ici réalisés en silicium, à partir de la couche mince de silicium du substrat SOI. En variante, ils peuvent être réalisés en un matériau de haut indice de réfraction et transparent à la longueur d'onde du signal optique destiné à circuler dans le circuit photonique 14.1, comme par exemple un nitrure de silicium, entre autres. La couche optique 14 est formée par les guides d'onde qui peuvent présenter une épaisseur constante, et par un matériau diélectrique de bas indice de réfraction, par exemple un oxyde de silicium. Par ailleurs, le circuit photonique 14.1 comporte au moins un composant optique actif tel qu'un modulateur optique, un filtre optique, ou une photodiode. Dans cet exemple, il comporte un modulateur optique 14.2 et une photodiode 14.3.

L'interposeur photonique 10 comporte ensuite la couche inférieure diélectrique 15, qui s'étend ici sous et au contact de la couche optique 14. Elle est réalisée ici en un matériau diélectrique, par exemple en un oxyde de silicium, entre autres. Elle participe à former la gaine de bas indice de réfraction qui entoure le circuit photonique 14.1.

L'interposeur photonique 10 comporte ensuite une ou plusieurs couches de redistribution 16 (i.e. des couches de routage de type *BEOL*), qui s'étend ici sous et au contact de la couche inférieure diélectrique 15. Elle comporte des vias conducteurs et lignes conductrices pour au moins assurer une redistribution électrique entre des portions d'alimentation 17.1, 17.6, 17.7 et des vias traversants silicium 19 (TSV pour *Through-Silicon Via,* en anglais), pour assurer ici l'alimentation électrique (voire en outre la transmission de données électriques) de la puce microélectronique 20 et celle de la puce de conversion 30. A noter que l'interposeur peut également comporter une couche de redistribution supérieure située entre la couche d'interconnexion 11 et la couche diélectrique 13.1. Par ailleurs, une telle couche de redistribution 16 peut être absente lorsque l'interposeur photonique 10 ne participe pas à alimenter électriquement les puces microélectroniques 20, 30.

De plus, l'interposeur photonique 10 comporte au moins un TSV dit de commande 18, et ici au moins deux TSV de commande, dont l'un 18.1 assure la connexion électrique entre la première portion conductrice supérieure 11.2 de commande (destinée à être connectée à la puce microélectronique 20) et la première portion conductrice inférieure 17.2 de commande (destinée à être connectée à la puce de conversion 30), et l'autre 18.2 assure la connexion électrique entre la deuxième portion conductrice supérieure 11.3 de commande (destinée à être connectée à la puce microélectronique 20) et la deuxième portion conductrice inférieure 17.4 de commande (destinée à être connectée à la puce de conversion 30). Ces TSV de commande 18 s'étendent verticalement, suivant l'axe Z, sur sensiblement toute l'épaisseur de l'interposeur photonique 10, et traversent donc au moins la couche diélectrique 13.1, la couche épaisse 12 de silicium, la couche diélectrique 13.2, la couche optique 14, la couche inférieure diélectrique 15. Ils peuvent présenter une hauteur de l'ordre de 100µm environ et un diamètre de 10µm environ.

Il en ressort que les TSV de commande 18 assure une connexion électrique verticale, directe, entre deux puces microélectroniques 20, 30 situées en vis-à-vis et de part et d'autre de l'interposeur photonique 10, ici entre la puce microélectronique 20 et la puce de conversion 30, sans passer par une ligne conductrice intermédiaire située par exemple dans une couche de redistribution 16. Il s'ensuit que les premières portions supérieure 11.2 et inférieure 17.2 de commande sont situées à la perpendiculaire l'une de l'autre, tout comme c'est le cas ici pour les deuxièmes portions supérieure 11.3 et inférieure 17.4 de commande. Aussi, les puces microélectronique 20 et de conversion 30 sont au moins en partie situées à la verticale (à l'aplomb) l'une de l'autre. On réduit ainsi la distance entre ces puces microélectroniques 20, 30, qui peut être de l'ordre de la centaine de microns, et non plus de l'ordre de plusieurs centaines de microns ou du millimètre comme dans l'exemple de l'art antérieur lorsque les puces microélectroniques sont disposées à côté les unes des autres dans le plan XY.

L'interposeur photonique 10 peut comporter des TSV dits d'alimentation 19, qui participent à assurer la connexion électrique entre les premières portions supérieures 11.1 et inférieures 17.1 d'alimentation, pour l'alimentation électrique de la puce microélectronique 20. Ces TSV 19 s'étendent verticalement, suivant l'axe Z, sur au moins une partie de l'épaisseur de l'interposeur photonique 10, et traversent ici la couche épaisse 12 de silicium, la couche diélectrique 13.2, la couche optique 14, la couche inférieure diélectrique 15. Des vias conducteurs et lignes conductrices de la couche de redistribution 16 assurent la connexion électrique des TSV d'alimentation 19 avec les portions inférieures d'alimentation 11.1.

Par ailleurs, l'interposeur photonique 10 repose sur un support d'alimentation 2 par l'intermédiaire de plots d'alimentation 6, par exemple ici des billes conductrices en un matériau ductile, tel que par exemple des alliages à base d'étain comme SnAg. Les premières portions inférieures d'alimentation 17.1 sont au contact de premières billes conductrices 6 (pour l'alimentation électrique de la puce microélectronique 20), et les deuxièmes portions inférieures d'alimentation 17.6 sont au contact de deuxièmes billes conductrices 6 (pour l'alimentation électrique de la puce de conversion 30). Les billes conductrices 6 peuvent présenter un diamètre supérieur à l'épaisseur de la ou des puces 30, par exemple de l'ordre de 300µm, permettant ainsi le report du dispositif optoélectronique 1 sur le support d'alimentation 2. Le support d'alimentation 2 peut être un circuit imprimé PCB (pour *Printed Circuit Board,* en anglais). Il peut également transmettre des données électriques aux puces 20 et 30.

Le dispositif optoélectronique 1 comporte ici au moins une puce microélectronique 20, assemblée mécaniquement et connectée électriquement à l'interposeur photonique 10 par la face supérieure 10a de celui-ci. La puce microélectronique 20 peut ici être destinée à communiquer avec le modulateur optique 14.2 et la photodiode 14.3 par l'intermédiaire de la puce de conversion 30. Elle envoie et reçoit des informations avec la puce de conversion 30, par exemple elle peut envoyer un signal de commande destiné au modulateur optique 14.2, et recevoir un signal de mesure provenant de la photodiode 14.3. La puce microélectronique 20 comporte ici un circuit intégré électronique ElC, de type CMOS, et comporte des composants électroniques actifs tels que des diodes, transistors, condensateurs, résistances... Elle comporte ici une couche d'interconnexion, comportant des portions conductrices, dont des portions conductrices d'alimentation 21, au moins une première portion conductrice de commande 22 (pour communiquer avec le modulateur optique 14.2), et au moins une deuxième portion conductrice de commande 23 (pour communiquer avec la photodiode 14.3).

La ou les premières puces microélectroniques 20 peuvent comporter un dispositif de refroidissement thermique 4, formé ici par des ailettes réalisées en un matériau thermiquement conducteur, qui s'étendent à partir de la face supérieure des puces microélectroniques 20. Ce dispositif permet de refroidir efficacement les puces microélectroniques 20. Notons ici que les composants optiques actifs 14.2, 14.3 sont situés à proximité de la face inférieure 10b de l'interposeur photonique 10, et sont donc à distance des puces microélectroniques 20. Ils ne sont donc pas ou peu impactés par l'échauffement des puces microélectroniques 20, ce qui permet de préserver leurs performances.

Par ailleurs, les puces microélectroniques 20 peuvent être maintenues assemblées à l'interposeur photonique 10 par une couche d'encapsulation 5, par exemple en silicone ou résine époxy, qui recouvre la face supérieure 10a de l'interposeur photonique 10, s'étend entre les plots d'interconnexion 24, et s'étend au contact des puces microélectroniques 20 dans le plan XY. Les plots d'interconnexion 24, comme les plots d'interconnexion 36, peuvent être agencés de manière périodique avec un pas inférieur ou égal à 40µm environ.

Le dispositif optoélectronique 1 comporte ici au moins une puce de conversion électro-optique 30, assemblée mécaniquement et connectée électriquement à l'interposeur photonique 10 par la face inférieure 10b de celui-ci. La puce de conversion 30 assure ici l'interface électrique ou électronique entre la puce microélectronique 20 d'une part, et le modulateur optique 14.2 et la photodiode 14.3 d'autre part. Elle échange des données (signaux électriques) avec la puce 20 (par ex. elle traite les informations reçues de la puce 20 pour les stocker temporairement, les orienter, les reformater, puis les transmettre vers le modulateur optique 14.2 et/ou la photodiode 14.3. Idem pour les informations reçues du modulateur optique 14.2 et/ou de la photodiode 14.3 à transmettre à la puce 20). La puce de conversion 30 comporte ici un circuit intégré électronique (par ex. de type CMOS), et comporte des composants électroniques actifs tels que des diodes, transistors, condensateurs, résistances... Elle comporte plus précisément un transmetteur CMOS permettant de piloter le modulateur optique 14.2 à un débit de plusieurs dizaines de Gb/s, par exemple 20 à 50Gb/s, voire davantage. Il comporte également un récepteur CMOS (par ex. un amplificateur transimpédance TIA pour *Translmpedance Amplifier,* en anglais) pour adapter le signal électrique reçu de la photodiode 14.3 et le transmettre à la puce microélectronique 20. Elle comporte ici une couche d'interconnexion, comportant des portions conductrices, dont des portions conductrices d'alimentation 31, des premières portions conductrices de commande 32 et intermédiaires 33 pour communiquer avec la puce microélectronique 20 et le modulateur optique 14.2), et des deuxièmes portions conductrices de commande 34 et intermédiaires 35 pour communiquer avec la puce microélectronique 20 et la photodiode 14.3.

Le circuit photonique 14.1 comporte une entrée 14.1e et une sortie 14.1s optiques, adaptées à recevoir et à transmettre le signal optique à des guides d'onde externes, par exemple des fibres optiques 3. Celles-ci peuvent être disposées de sorte à transmettre le signal optique par la tranche de l'interposeur photonique 10, ou être disposées à la verticale ou inclinées vis-à-vis du plan XY. L'interposeur photonique 10 peut comporter des échancrures permettant le positionnement et l'alignement des fibres optiques vis-à-vis des entrée et sortie optiques, comme le décrit notamment le document FR3075991A1.

A titre d'exemple, les puces microélectroniques 20 peuvent présenter une épaisseur de l'ordre de 100µm, les plots d'interconnexion 24 entre l'interposeur photonique 10 et les puces microélectroniques 20 peuvent présenter une épaisseur de l'ordre de 30µm. L'interposeur photonique 10 peut présenter une épaisseur de l'ordre de 100µm entre ses faces supérieure 10a et inférieure 10b, et les billes d'alimentation 6 peuvent présenter une épaisseur de l'ordre de 250µm.

En fonctionnement, la puce microélectronique 20 est alimentée électriquement par l'intermédiaire de l'interposeur photonique 10. Le courant électrique d'alimentation circule par l'intermédiaire des billes d'alimentation 6, des portions conductrices inférieures d'alimentation 17.1, des lignes conductrices de la couche de redistribution 16, des TSV d'alimentation 19, des portions conductrices supérieures d'alimentation 11.1, et des portions conductrices d'alimentation 21 de la puce microélectronique 20.

La puce de conversion 30 est alimentée électriquement par l'intermédiaire de l'interposeur photonique 10. Le courant électrique d'alimentation circule par l'intermédiaire des billes d'alimentation 6, des deuxièmes portions conductrices inférieures d'alimentation 17.6, des lignes conductrices de la couche de redistribution 16, des deuxièmes portions conductrices inférieures intermédiaires 17.7, et des portions conductrices d'alimentation 31 de la puce de conversion 30.

Un signal optique est transmis dans le circuit photonique 14.1 par une fibre optique externe, et circule entre l'entrée 14.1e et la sortie 14.1s. Il est modulé par le modulateur optique 14.2, lequel est commandé par la puce microélectronique 20. Pour cela, la puce microélectronique 20 émet un signal électrique en direction de la puce de conversion 30, qui est transmis par sa première portion conductrice de commande 22, la première portion conductrice supérieure de commande 11.2, le TSV de commande 18.1, la première portion conductrice inférieure de commande 17.2, puis par la première portion conductrice de commande 32 de la puce de conversion 30. Le signal électrique est adapté par la puce microélectronique 20, puis est transmis au modulateur optique 14.2 par les portions conductrices intermédiaires 33, les portions conductrices inférieures intermédiaires 17.3, et les vias conducteurs 15.1. Le signal optique est alors modulé en conséquence.

De plus, la puce microélectronique 20 reçoit un signal électrique représentatif du signal détecté par la photodiode 14.3. Pour cela, la photodiode 14.3 émet un signal électrique en direction de la puce de conversion 30, qui circule par les vias conducteurs 15.2, les deuxièmes portions conductrices inférieures intermédiaires 17.5, et par les portions conductrices intermédiaires 35 de la puce de conversion 30. Celle-ci adapte le signal électrique, puis le transmet à la puce microélectronique 20, qui circule alors par la deuxième portion conductrice de commande 34, la deuxième portion conductrice inférieure de commande 17.4, le TSV de commande 18.2, la deuxième portion conductrice supérieure de commande 11.3, et par la deuxième portion conductrice de commande 23 de la puce microélectronique 20.

Aussi, par le fait que les puces microélectronique 20 et de conversion 30 sont situées de part et d'autre de l'interposeur photonique 10, et sont connectées directement l'une à l'autre par au moins un TSV de commande 18, on réduit la distance séparant ces deux puces microélectroniques 20, 30, laquelle peut être de l'ordre de la centaine de microns. Cela permet alors de diminuer la latence de communication entre les puces microélectroniques, et de réduire la consommation électrique et le budget thermique. De plus, on obtient un gain de place sur la face supérieure 10a de l'interposeur photonique 10, ce qui peut être mis à profit pour connecter davantage de puces microélectroniques 20 telles que des puces de calcul et des puces mémoires. Par ailleurs, la bande passante entre les puces microélectroniques 20, 30 peut être augmentée du fait d'une réduction des effets parasites liés à la propagation des signaux hautes fréquences sur de plus longues distances. Enfin, le fait de situer les composants optiques actifs à proximité de la face inférieure 10b permet de limiter l'impact négatif sur leurs performances que peut avoir l'échauffement des premières puces microélectroniques 20. De plus, la proximité entre les composants optiques et la puce 30 est conservée comme dans les architectures classiques. L'interposeur photonique 10 peut former un réseau sur puce de type ONoC (pour Optical Network on Chip, en anglais). Plusieurs interposeurs photoniques peuvent être connectés les uns aux autres au moyen de fibres ou de guides optiques.

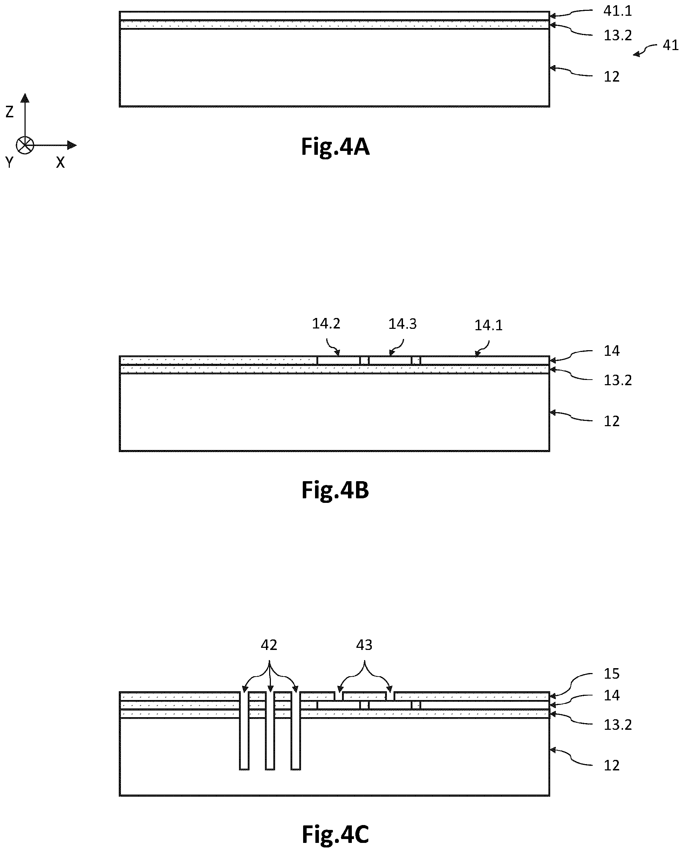

Les figures 4A à 4L sont des vues schématiques et partielles illustrant différentes étapes d'un procédé de fabrication d'un dispositif optoélectronique 1 similaire à celui illustré sur la fig.2. L'interposeur photonique 10 est réalisé à partir d'un substrat SOI, et la couche optique 14 avec le circuit photonique 14.1 se situe entre la couche épaisse 12 de silicium et la face inférieure 10b.

En référence à la fig.4A, on fournit un substrat SOI 41. Il est formé d'une couche épaisse 12 en silicium, d'une couche diélectrique 13.2 (BOX) en un oxyde de silicium destinée à former la couche supérieure diélectrique, et d'une couche mince 41.1 en silicium. La couche épaisse 12 peut présenter une épaisseur de plusieurs centaines de microns, par exemple de 725µm.

En référence à la fig.4B, on réalise ensuite la couche optique 14, ici à partir de la couche mince 41.1 de silicium, qui contient le circuit photonique 14.1. Les guides d'onde sont réalisés en silicium, et on réalise les composants optiques actifs, par exemple ici un modulateur optique 14.2 (par exemple un résonateur en anneau) et une photodiode 14.3. Un matériau diélectrique de faible indice de réfraction, par exemple un oxyde de silicium, entoure le circuit photonique 14.1 dans le plan XY.

En référence à la fig.4C, on réalise une couche diélectrique de faible indice de réfraction par dépôt sur la couche optique 14. Cette couche diélectrique forme la couche inférieure diélectrique 15. Puis on réalise également des ouvertures 43 qui débouchent sur les composants optiques actifs, ces ouvertures 43 étant destinées à la réalisation ultérieure des vias conducteurs. On réalise également des ouvertures non traversantes 42, destinées à former ultérieurement les TSV, par gravure sèche. Ces ouvertures 42 s'étendent au travers de la couche diélectrique 15, de la couche optique 14 (dans le matériau diélectrique), dans la couche diélectrique 13.2, et s'étendent sur une partie de l'épaisseur de la couche épaisse 12. Elles présentent un diamètre de l'ordre de 10µm et une hauteur de l'ordre de 100µm.

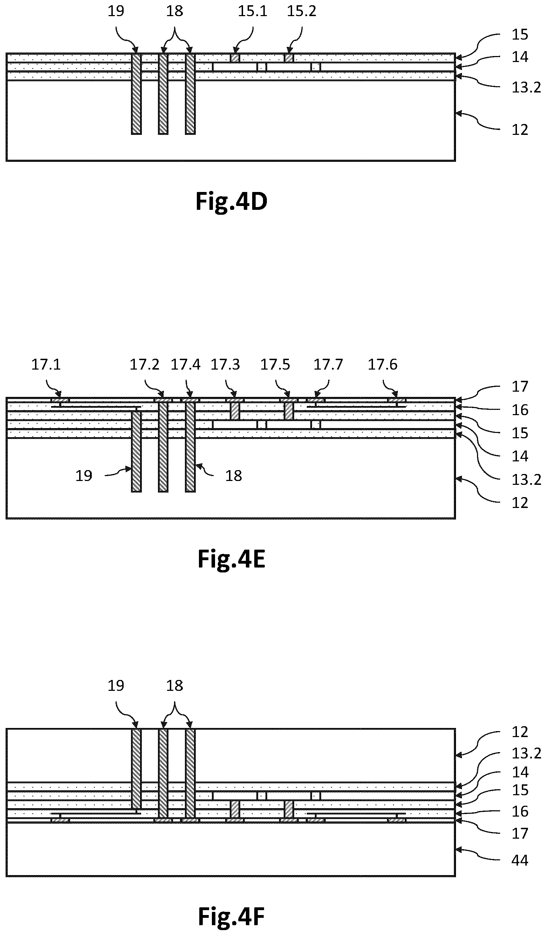

En référence à la fig.4D, on réalise les TSV de commande 18 et les TSV d'alimentation 19, ainsi que les vias conducteurs 15.1, 15.2, par dépôt d'au moins un matériau métallique dans les différentes ouvertures. Le ou les matériaux métalliques peuvent être, par exemple, du tungstène, du cuivre, de l'aluminium, entre autres. En pratique, on réalise les ouvertures 43 puis les vias conducteurs 15.1 et 15.2. Ensuite, on réalise les ouvertures 42 puis les TSV 18 et 19.

En référence à la fig.4E, on réalise la couche de redistribution 16, qui comporte des vias conducteurs et des lignes conductrices s'étendant dans un matériau diélectrique tel qu'un oxyde de silicium. Il s'agit d'une couche de type BEOL (pour *Back End of Line,* en anglais). Les TSV d'alimentation 19 affleurent la couche de redistribution 16 sans la traverser, alors que les TSV de commande 18 et les vias conducteurs des composants optiques actifs la traversent.

On réalise ensuite la couche inférieure d'interconnexion 17. Celle-ci comporte des portions conductrices entourées dans le plan XY par un matériau diélectrique tel qu'un oxyde de silicium. Les portions conductrices sont ici les premières portions inférieures d'alimentation 17.1 (connectées aux TSV d'alimentation 19 par les lignes conductrices de la couche de redistribution 16), les premières portions conductrices de commande 17.2, 17.4 (au contact des TSV de commande 18), des premières portions conductrices intermédiaires 17.3, 17.5 (au contact des vias conducteurs), et des deuxièmes portions conductrices d'alimentation 17.6, 17.7 (connectées entre elles par les lignes conductrices de la couche de redistribution 16).

En référence à la fig.4F, on assemble un substrat-poignée 44 à la couche d'interconnexion 17, ici par collage direct, et l'on retourne la structure obtenue. On réduit ensuite l'épaisseur de la couche épaisse 12 par abrasion mécanique et gravure plasma sélective, de manière à rendre traversants les TSV 18, 19. La couche épaisse 12 peut alors présenter une épaisseur de l'ordre de la centaine de microns.

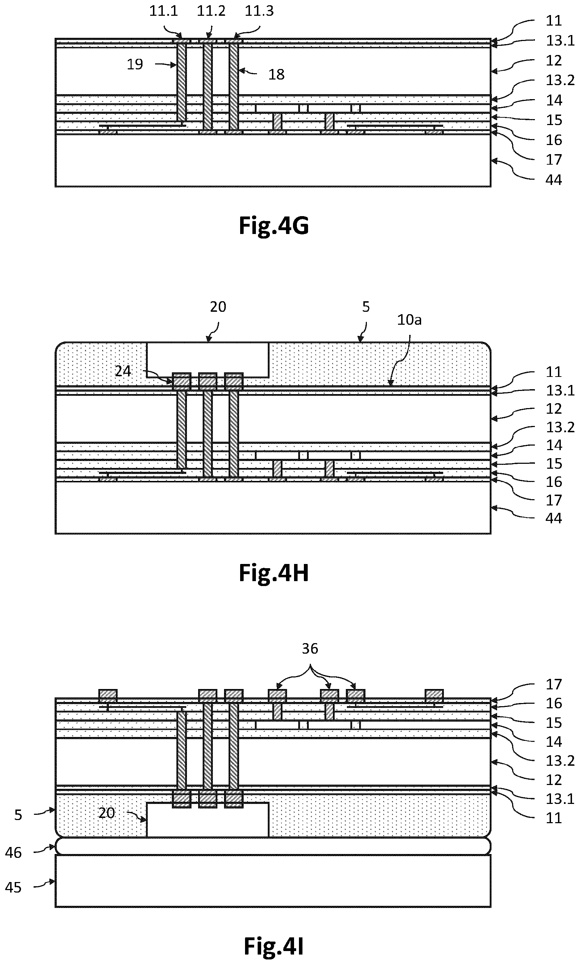

En référence à la fig.4G, on réalise la couche d'interconnexion 11, qui comporte des portions conductrices au contact des TSV 18, 19 isolées de la couche épaisse 12 par une couche diélectrique 13.1, et entourées dans le plan XY par un matériau diélectrique. Les portions conductrices sont ici des portions conductrices d'alimentation 11.1 (au contact des TSV d'alimentation 19) et des portions conductrices de commande 11.2, 11.3 (au contact des TSV de commande 18).

En référence à la fig.4H, on réalise des plots d'interconnexion 24, appelés *copper pillars* en anglais (dépôt physique en phase vapeur (PVD) d'une sous-couche de Ti/Cu, lithographie pour définir la taille des plots (diamètre de l'ordre de 10 à 500µm et avec un pas minimum entre les plots de 20µm), électrolyse de Cu/Ni/SnAg et suppression de la résine (*stripping* en anglais), gravure de la sous-couche de Ti/Cu autour des plots, puis recuit thermique) ou UBM (pour *Under Bumping Metallization* en anglais) formés d'un empilement Cu/Ni/Au, au contact des portions conductrices de la couche d'interconnexion 11. On place et assemble ensuite la puce microélectronique 20 à l'interposer 10 par brasure collective. Notons que le fait d'assembler le substrat-poignée 44 par collage direct permet de supporter une température d'assemblage de la puce microélectronique 20 par brasure des plots d'interconnexion 24, laquelle peut être de l'ordre de 260°C.

On dépose ensuite une couche d'encapsulation 5 (*moiding* en anglais), de sorte qu'elle s'étende sur la face supérieure 10a, et entoure la puce microélectronique 20 et les plots d'interconnexion 24 dans le plan XY, renforçant ainsi le maintien mécanique de la puce microélectronique 20 sur l'interposeur photonique 10. La couche d'encapsulation 5 peut être réalisée en une résine époxy, entre autres.

En référence à la fig.4I, on assemble un autre substrat-poignée 45 à la face libre plane formée par la puce microélectronique 20 et la couche d'encapsulation 5, ici par l'intermédiaire d'une colle polymère 46. On retourne la structure ainsi obtenue, et l'on retire le substrat-poignée 44 par abrasion. On rend libre la face de la couche d'interconnexion 17, et l'on réalise les plots d'interconnexions 36 au contact des différentes portions conductrices appelés UBM et formés de l'empilement Cu/Ni/Au.

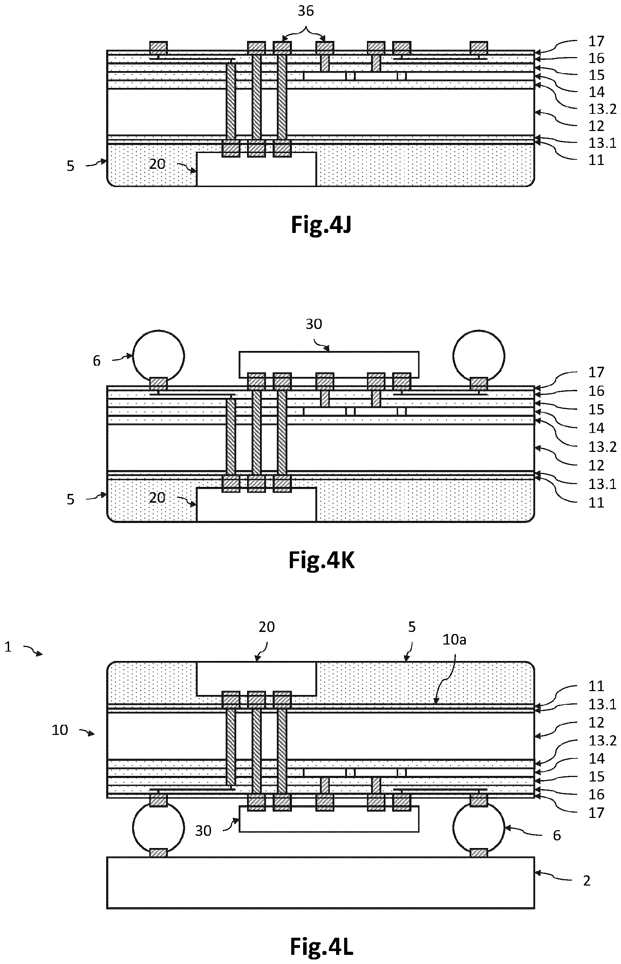

En référence à la fig.4J, on retire le substrat-poignée 45 et la couche de colle 46. La structure ainsi obtenue peut être manipulée malgré l'épaisseur réduite de l'interposeur photonique 10, ici grâce à l'épaisseur et la tenue mécanique de l'empilement formé de l'interposeur photonique 10, de la puce microélectronique 20 et de la couche d'encapsulation 5.

En référence à la fig.4K, on assemble la puce de conversion 30 ainsi que les billes d'alimentation 6 aux différents plots d'interconnexion par placement de billes ou sérigraphie.

En référence à la fig.4L, on retourne la structure ainsi obtenue, que l'on assemble à un support d'alimentation 2 par l'intermédiaire des billes d'alimentation 6. Un dispositif de refroidissement peut être fixé sur la puce microélectronique 20.

On obtient ainsi un dispositif optoélectronique 1 formé d'un interposeur photonique actif 10 auquel sont assemblées et connectées au moins une puce microélectronique 20 et au moins une puce de conversion 30. La puce microélectronique 20 et la puce de conversion 30 sont directement connectées entre elles par des TSV de commande, réduisant ainsi la distance les séparant, ce qui améliore les performances du dispositif optoélectronique 1 (temps de latence réduit, consommation électrique réduite, bande passante augmentée...). De plus, la puce microélectronique 20 est située sur la face supérieure 10a de l'interposeur photonique 10, et le circuit photonique 14.1 est situé à proximité de la face inférieure 10b. On limite ainsi la dégradation des performances des composants optiques actifs qui peut entraîner l'échauffement de la puce microélectronique 20. Par ailleurs, le nombre de puces microélectroniques (calcul, mémoire...) situées sur la face supérieure 10a peut être augmenté.

Des modes de réalisation particuliers viennent d'être décrits. Différentes variantes et modifications apparaîtront à l'homme du métier. Comme indiqué précédemment, l'interposeur photonique 10 peut comporter une ou plusieurs couches de redistribution 16 entre la couche supérieure d'interconnexion 11 et la couche épaisse 12 en silicium. Il peut également ne pas comporter de couches de redistribution si les puces sont alimentées par une connexion filaire (*wire bonding,* en anglais).

## Revendications

1. Dispositif optoélectronique (1), comportant :
o un interposeur photonique (10), présentant une face supérieure (10a) et une face opposée inférieure (10b), réalisé à base de silicium, et comportant :
• un circuit photonique (14.1) contenant au moins un composant optique actif (14.2), et
• une couche supérieure d'interconnexion (11), définissant la face supérieure (10a), et comportant au moins une première portion conductrice supérieure de commande (11.2) ;
o au moins une première puce microélectronique (20), assemblée à la face supérieure (10a) et connectée à la première portion conductrice supérieure de commande (11.2), destinée à transmettre ou recevoir un signal électrique à une deuxième puce microélectronique (30) ;
o la deuxième puce microélectronique (30), dite de conversion électro-optique, assemblée et connectée à l'interposeur photonique (10), lequel assure la connexion électrique de la deuxième puce microélectronique (30) au composant optique actif (14.2) d'une part et à la première puce microélectronique (20) d'autre part ;
o **caractérisé en ce que** :
o l'interposeur photonique (10) comporte :
• une couche inférieure d'interconnexion (17), définissant la face inférieure (10b), comportant au moins une première portion conductrice inférieure de commande (17.2), et des premières portions conductrices inférieures intermédiaires (17.3) ;
• au moins un via traversant silicium (18.1) connectant directement la première portion conductrice supérieure de commande (11.2) à la première portion conductrice inférieure de commande (17.2) ;
• des vias conducteurs (15.1) connectant les premières portions conductrices inférieures intermédiaires (17.3) au composant optique actif (14.2) ;
o la deuxième puce microélectronique (30) est assemblée à la face inférieure (10b), et est connectée à la première portion conductrice inférieure de commande (17.2) d'une part, et aux premières portions conductrices inférieures intermédiaires (17.3) d'autre part.

2. Dispositif optoélectronique (1) selon la revendication 1, dans lequel l'interposeur photonique (10) comporte un empilement de couches, dont une couche épaisse (12) de silicium et une couche optique (14) dans lequel est formé le circuit photonique (14.1), la couche épaisse (12) étant située du côté de la face supérieure (10a) et la couche optique (14) étant située du côté de la face inférieure (10b).

3. Dispositif optoélectronique (1) selon la revendication 2, dans lequel l'interposeur photonique (10) comporte une couche diélectrique (13.2) réalisée en un oxyde de silicium, et située entre et au contact de la couche épaisse (12) et de la couche optique (14).

4. Dispositif optoélectronique (1) selon l'une quelconque des revendications 1 à 3, dans lequel l'interposeur photonique (10) comporte des premières portions conductrices inférieures d'alimentation (17.1) situées au niveau de la face inférieure (10b) et connectées à une source électrique d'alimentation de la première puce microélectronique (20), et des portions conductrices supérieures d'alimentation (11.1) situées au niveau de la face supérieure (10a) et connectées aux premières portions conductrices inférieures d'alimentation (17.1) par des vias traversants silicium (19), et la première puce microélectronique (20) comporte des portions conductrices d'alimentation (21) connectées aux portions conductrices supérieures d'alimentation (11.1).

5. Dispositif optoélectronique (1) selon l'une quelconque des revendications 1 à 4, dans lequel l'interposeur photonique (10) comporte des deuxièmes portions conductrices inférieures d'alimentation (17.6) situées au niveau de la face inférieure (10b) et connectées à une source électrique d'alimentation de la deuxième puce microélectronique (30), et des deuxièmes portions conductrices intermédiaires d'alimentation (17.7) situées au niveau de la face inférieure (10b) et connectées aux deuxièmes portions conductrices inférieures d'alimentation (17.6), et la deuxième puce microélectronique (30) comporte des portions conductrices d'alimentation (31) connectées aux deuxièmes portions conductrices intermédiaires d'alimentation (17.7).

6. Dispositif optoélectronique (1) selon la revendication 5, dans lequel l'interposeur photonique (10) comporte une ou plusieurs couches de redistribution (16), comportant des lignes conductrices et des vias conducteurs, situées entre et au contact d'une couche inférieure diélectrique (15) et de la couche inférieure d'interconnexion (17), la couche de redistribution (16) assurant la connexion électrique entre les deuxièmes portions conductrices intermédiaires d'alimentation (17.6) et les deuxièmes portions conductrices inférieures d'alimentation (17.7).

7. Dispositif optoélectronique (1) selon l'une quelconque des revendications 1 à 6, dans lequel le composant optique actif du circuit photonique (14.1) est choisi parmi un modulateur optique (14.2), un filtre optique et une photodiode (14.3).

8. Dispositif optoélectronique (1) selon l'une quelconque des revendications 1 à 7, comportant des guides d'onde externes (3) couplés optiquement avec le circuit photonique (14.1) de l'interposeur photonique (10).

9. Dispositif optoélectronique (1) selon l'une quelconque des revendications 1 à 8, comportant une couche d'encapsulation (5) s'étendant sur la face supérieure (10a) de l'interposeur photonique (10) et venant au contact de la première puce microélectronique (20).

10. Dispositif optoélectronique (1) selon l'une quelconque des revendications 1 à 9, dans lequel l'interposeur photonique (10) comporte une épaisseur, entre ses faces inférieure (10b) et supérieure (10a), inférieure ou égale à 200µm.

11. Dispositif optoélectronique (1) selon l'une quelconque des revendications 1 à 10, comportant une pluralité de vias traversant silicium (18.1) connectant directement la première portion conductrice supérieure de commande (11.2) à la première portion conductrice inférieure de commande (17.2), les premières portions conductrices supérieures de commande (11.2) étant connectées à la première puce microélectronique (20) par des plots supérieurs d'interconnexion (24), et les premières portions conductrices inférieures de commande (17.2) étant connectées à la deuxième puce microélectronique (30) par des plots inférieurs d'interconnexion (36), les plots supérieurs d'interconnexion (24) et les plots inférieurs d'interconnexion (36) étant agencés avec un pas inférieur ou égal à 40µm.

12. Dispositif optoélectronique (1) selon l'une quelconque des revendications 1 à 11, dans lequel la deuxième puce microélectronique (30) est assemblée à l'interposeur photonique (10) au moyen de plots inférieurs d'interconnexion (36), ces derniers étant au contact de la deuxième puce microélectronique (30) et de l'interposeur photonique (10).

13. Dispositif optoélectronique (1) selon l'une quelconque des revendications 1 à 12, dans lequel l'interposeur photonique (10) repose sur un support d'alimentation (2) par l'intermédiaire de plots d'alimentation (6) dont l'épaisseur est supérieure à celle de la deuxième puce microélectronique (30).

14. Procédé de fabrication d'un dispositif optoélectronique (1) selon l'une quelconque des revendications précédentes, comportant les étapes suivantes :
o fourniture d'un substrat SOI (41), comportant une couche épaisse (12) de silicium, une couche diélectrique (13.2) en un oxyde de silicium, et une couche mince (41.1) de silicium ;
o réalisation d'une couche optique (14) à partir de la couche mince (41.1) ;
o réalisation de vias traversants silicium (18, 19), dans des ouvertures non traversantes (42) s'étendant au travers de la couche optique (14), de la couche diélectrique (13.2), et au travers d'une partie de la couche épaisse (12) ;
o réalisation d'une couche inférieure diélectrique (15) s'étendant sur et au contact de la couche optique (14) ;
o réalisation de la couche inférieure d'interconnexion (17) sur une couche inférieure diélectrique (15) ;
o assemblage d'un premier substrat-poignée (44) par collage direct sur la couche inférieure d'interconnexion (17) ;
o amincissement de la couche épaisse (12), de manière à rendre débouchant les vias traversants silicium (18, 19) ;
o réalisation de la couche supérieure d'interconnexion (11), dans des portions conductrices sont au contact des vias traversants silicium (18, 19) ;
o retrait du premier substrat-poignée (44).

15. Procédé de fabrication selon la revendication 14, comportant les étapes suivantes :
o avant le retrait du premier substrat-poignée (44), assemblage de la première puce microélectronique (20) à la couche supérieure d'interconnexion (11), et dépôt d'une couche d'encapsulation (5) recouvrant la face supérieure (10a) ;
o assemblage d'un deuxième substrat-poignée (46) à une face libre plane formée par la première puce microélectronique (20) et la couche d'encapsulation (5), et retrait du premier substrat-poignée (44) ;
o retrait du deuxième substrat-poignée (46) ;
o assemblage de la deuxième puce microélectronique (30).

## Patentansprüche

1. Optoelektronische Vorrichtung (1), aufweisend:
o einen photonischen Interposer (10) mit einer Oberseite (10a) und einer unteren, gegenüberliegende Seite (10b), der aus Silizium hergestellt ist und Folgendes aufweist:
• einen photonischen Schaltkreis (14.1), der wenigstens eine aktive optische Komponente (14.2) enthält, und
• eine obere Verbindungsschicht (11), die die Oberseite (10a) definiert und wenigstens einen ersten oberen leitenden Steuerungsabschnitt (11.2) aufweist;
o wenigstens einen ersten Mikroelektronikchip (20), der an der Oberseite (10a) angebracht und an den ersten oberen leitenden Steuerungsabschnitt (11.2) angeschlossen ist, der dazu bestimmt ist, ein elektrisches Signal an einen zweiten Mikroelektronikchip (30) zu übertragen oder zu empfangen;
o den zweiten Mikroelektronikchip (30) zur elektrooptischen Umwandlung, der an einen photonischen Interposer (10) angebracht und angeschlossen ist, der den elektrischen Anschluss des zweiten Mikroelektronikchips (30) an die aktive optische Komponente (14.2) einerseits und an den ersten Mikroelektronikchip (20) andererseits sicherstellt;
o **dadurch gekennzeichnet, dass**:
oder photonische Interposer (10) Folgendes aufweist:
• eine untere Verbindungsschicht (17), die die Unterseite (10b) definiert, die wenigstens einen ersten unteren leitenden Steuerungsabschnitt (17.2) und erste untere leitende Zwischenabschnitte (17.3) aufweist;
• wenigstens eine Silizium-Durchkontaktierung (18.1), die den ersten oberen leitenden Steuerungsabschnitt (11.2) direkt an den ersten unteren leitenden Steuerungsabschnitt (17.2) anschließt;
• leitende Durchkontaktierungen (15.1), die die ersten unteren leitenden Zwischenabschnitte (17.3) direkt an die aktive optische Komponente (14.2) anschließen;
o der zweite Mikroelektronikchip (30) an der Unterseite (10b) angebracht ist und an den ersten unteren leitenden Steuerungsabschnitt (17.2) einerseits und an die ersten unteren leitenden Zwischenabschnitte (17.3) andererseits angeschlossen ist.

2. Optoelektronische Vorrichtung (1) nach Anspruch 1, wobei der photonische Interposer (10) einen Stapel von Schichten aufweist, davon eine Silizium-Dickschicht (12) und eine optische Schicht (14), in der der photonische Schaltkreis (14.1) ausgebildet ist, wobei sich die Dickschicht (12) aufseiten der Oberseite (10a) befindet und sich die optische Schicht (14) aufseiten der Unterseite (10b) befindet.

3. Optoelektronische Vorrichtung (1) nach Anspruch 2, wobei der photonische Interposer (10) eine dielektrische Schicht (13.2) aufweist, die aus einem Siliziumoxid hergestellt ist und sich zwischen und in Kontakt mit der Dickschicht (12) und der optischen Schicht (14) befindet.

4. Optoelektronische Vorrichtung (1) nach einem der Ansprüche 1 bis 3, wobei der photonische Interposer (10) erste untere leitende Versorgungsabschnitte (17.1), die sich an der Unterseite (10b) befinden und an eine Stromversorgungsquelle des ersten Mikroelektronikchips (20) angeschlossen sind, und obere leitende Versorgungsabschnitte (11.1) aufweist, die sich an der Oberseite (10a) befinden und über Silizium-Durchkontaktierungen (19) an die ersten unteren leitenden Versorgungsabschnitte (17.1) angeschlossen sind, und der erste Mikroelektronikchip (20) leitende Versorgungsabschnitte (21) aufweist, die an die oberen leitenden Versorgungsabschnitte (11.1) angeschlossen sind.

5. Optoelektronische Vorrichtung (1) nach einem der Ansprüche 1 bis 4, wobei der photonische Interposer (10) zweite untere leitende Versorgungsabschnitte (17.6), die sich an der Unterseite (10b) befinden und an eine Stromversorgungsquelle des zweiten Mikroelektronikchips (30) angeschlossen sind, und zweite zwischenliegende leitende Versorgungsabschnitte (17.7) aufweist, die sich an der Unterseite (10b) befinden und an die zweiten unteren leitenden Versorgungsabschnitte (17.6) angeschlossen sind, und der zweite Mikroelektronikchip (30) leitende Versorgungsabschnitte (31) aufweist, die an die zweiten zwischenliegenden leitenden Versorgungsabschnitte (17.7) angeschlossen sind.

6. Optoelektronische Vorrichtung (1) nach Anspruch 5, wobei der photonische Interposer (10) eine oder mehrere Umverteilungsschichten (16) aufweist, die Leiterbahnen und leitende Durchkontaktierungen aufweisen, die sich zwischen und in Kontakt mit einer unteren dielektrischen Schicht (15) und der unteren Verbindungsschicht (17) befinden, wobei die Umverteilungsschicht (16) den elektrischen Anschluss zwischen den zweiten zwischenliegenden leitenden Versorgungsabschnitten (17.6) und den zweiten unteren leitenden Versorgungsabschnitten (17.7) sicherstellt.

7. Optoelektronische Vorrichtung (1) nach einem der Ansprüche 1 bis 6, wobei die aktive optische Komponente des photonischen Schaltkreises (14.1) aus einem optischen Modulator (14.2), einem optischen Filter und einer Photodiode (14.3) gewählt ist.

8. Optoelektronische Vorrichtung (1) nach einem der Ansprüche 1 bis 7, aufweisend externe Wellenleiter (3), die mit dem photonischen Schaltkreis (14.1) des photonischen Interposers (10) optisch gekoppelt sind.

9. Optoelektronische Vorrichtung (1) nach einem der Ansprüche 1 bis 8, aufweisend eine Kapselungsschicht (5), die sich auf der Oberseite (10a) des photonischen Interposers (10) erstreckt und mit dem ersten Mikroelektronikchip (20) in Kontakt kommt.

10. Optoelektronische Vorrichtung (1) nach einem der Ansprüche 1 bis 9, wobei der photonische Interposer (10) eine Dicke zwischen seiner Unterseite (10b) und Oberseite (10a) kleiner als oder gleich 200 µm aufweist.

11. Optoelektronische Vorrichtung (1) nach einem der Ansprüche 1 bis 10, aufweisend eine Mehrzahl von Silizium-Durchkontaktierungen (18.1), die den ersten oberen leitenden Steuerungsabschnitt (11.2) direkt an den ersten unteren leitenden Steuerungsabschnitt (17.2) anschließt, wobei die ersten oberen leitenden Steuerungsabschnitte (11.2) durch obere Verbindungspads (24) an den ersten Mikroelektronikchip (20) angeschlossen sind und die ersten unteren leitenden Steuerungsabschnitte (17.2) durch untere Verbindungspads (36) an den zweiten Mikroelektronikchip (30) angeschlossen sind, wobei die oberen Verbindungspads (24) und die unteren Verbindungspads (36) mit einem Abstand kleiner als oder gleich 40 µm angeordnet sind.

12. Optoelektronische Vorrichtung (1) nach einem der Ansprüche 1 bis 11, wobei der zweite Mikroelektronikchip (30) am photonischen Interposer (10) mittels unterer Verbindungspads (36) angebracht ist, wobei letztere mit dem zweiten Mikroelektronikchip (30) und dem photonischen Interposer (10) in Kontakt stehen.

13. Optoelektronische Vorrichtung (1) nach einem der Ansprüche 1 bis 12, wobei der photonische Interposer (10) mittels Versorgungspads (6), deren Dicke größer als die des zweiten Mikroelektronikchips (30) ist, auf einem Versorgungsträger (2) aufliegt.

14. Verfahren zur Herstellung einer optoelektronischen Vorrichtung (1) nach einem der vorhergehenden Ansprüche, aufweisend die folgenden Schritte:
o Bereitstellen eines SOI-Substrats (41), das eine Silizium-Dickschicht (12), eine dielektrische Schicht (13.2) aus einem Siliziumoxid und eine Silizium-Dünnschicht (41.1) aufweist;
o Herstellen einer optischen Schicht (14) aus der Dünnschicht (41.1);
o Herstellen von Silizium-Durchkontaktierungen (18, 19) in nicht durchgehenden Öffnungen (42), die sich durch die optische Schicht (14), die dielektrische Schicht (13.2) und durch einen Teil der Dickschicht (12) erstrecken;
o Herstellen einer unteren dielektrischen Schicht (15), die sich auf und in Kontakt mit der optischen Schicht (14) erstreckt;
o Herstellen der unteren Verbindungsschicht (17) auf einer unteren dielektrischen Schicht (15);
o Anbringen eines ersten Griffsubstrats (44) durch direktes Kleben auf die untere Verbindungsschicht (17);
o Ausdünnen der Dickschicht (12), um die Silizium-Durchkontaktierungen (18, 19) durchgängig zu machen;
o Herstellen der oberen Verbindungsschicht (11) in leitende Abschnitte mit den Silizium-Durchkontaktierungen (18, 19) in Kontakt stehen;
o Entfernen des ersten Griffsubstrats (44).

15. Herstellungsverfahren nach Anspruch 14, aufweisend die folgenden Schritte:
o vor dem Entfernen des ersten Griffsubstrats (44), Anbringen des ersten Mikroelektronikchips (20) an der oberen Verbindungsschicht (11) und Aufbringen einer Kapselungsschicht (5), die die Oberseite (10a) bedeckt;
o Anbringen eines zweiten Griffsubstrats (46) an einer ebenen freien Fläche, die vom ersten Mikroelektronikchip (20) und der Kapselungsschicht (5) gebildet ist, und Entfernen des ersten Griffsubstrats (44);
o Entfernen des zweiten Griffsubstrats (46);
o Anbringen des zweiten Mikroelektronikchips (30).

## Claims

1. Optoelectronic device (1), comprising:
o a photonic interposer (10), having an upper face (10a) and an opposite, lower face (10b), produced based on silicon, and comprising:
• a photonic circuit (14.1) containing at least one active optical component (14.2), and
• an upper interconnect layer (11), defining the upper face (10a), and comprising at least one first upper conductive control portion (11.2);
o at least one first microelectronic chip (20), joined to the upper face (10a) and connected to the first upper conductive control portion (11.2), intended to transmit or receive an electrical signal to or from a second microelectronic chip (30);
o the second microelectronic chip (30), called electro-optical conversion chip, joined and connected to the photonic interposer (10), which provides the electrical connection of the second microelectronic chip (30) to the active optical component (14.2), on the one hand, and to the first microelectronic chip (20), on the other hand;
o **characterized in that**:
o the photonic interposer (10) comprises:
• a lower interconnect layer (17), defining the lower face (10b), comprising at least one first lower conductive control portion (17.2), and first lower conductive intermediate portions (17.3);
• at least one through-silicon via (18.1) directly connecting the first upper conductive control portion (11.2) to the first lower conductive control portion (17.2);
• conductive vias (15.1) connecting the first lower conductive intermediate portions (17.3) to the active optical component (14.2);
o the second microelectronic chip (30) is joined to the lower face (10b), and is connected to the first lower conductive control portion (17.2), on the one hand, and to the first lower conductive intermediate portions (17.3), on the other hand.

2. Optoelectronic device (1) according to Claim 1, wherein the photonic interposer (10) comprises a stack of layers, including a thick silicon layer (12) and an optical layer (14) in which the photonic circuit (14.1) is formed, the thick layer (12) being situated on the side of the upper face (10a) and the optical layer (14) being situated on the side of the lower face (10b).

3. Optoelectronic device (1) according to Claim 2, wherein the photonic interposer (10) comprises a dielectric layer (13.2) made of a silicon oxide, and situated between and in contact with the thick layer (12) and the optical layer (14).

4. Optoelectronic device (1) according to any one of Claims 1 to 3, wherein the photonic interposer (10) comprises first lower conductive power supply portions (17.1) situated on the lower face (10b) and connected to an electric power source of the first microelectronic chip (20), and upper conductive power supply portions (11.1) situated on the upper face (10a) and connected to the first lower conductive power supply portions (17.1) by through-silicon vias (19), and the first microelectronic chip (20) comprises conductive power supply portions (21) connected to the upper conductive power supply portions (11.1).

5. Optoelectronic device (1) according to any one of Claims 1 to 4, wherein the photonic interposer (10) comprises second lower conductive power supply portions (17.6) situated on the lower face (10b) and connected to an electric power source of the second microelectronic chip (30), and second conductive intermediate power supply portions (17.7) situated on the lower face (10b) and connected to the second lower conductive power supply portions (17.6), and the second microelectronic chip (30) comprises conductive power supply portions (31) connected to the second conductive intermediate power supply portions (17.7).

6. Optoelectronic device (1) according to Claim 5, wherein the photonic interposer (10) comprises one or more redistribution layers (16), comprising conductive lines and conductive vias, situated between and in contact with a lower dielectric layer (15) and the lower interconnect layer (17), the redistribution layer (16) providing the electrical connection between the second conductive intermediate power supply portions (17.6) and the second lower conductive power supply portions (17.7).

7. Optoelectronic device (1) according to any one of Claims 1 to 6, wherein the active optical component of the photonic circuit (14.1) is chosen from an optical modulator (14.2), an optical filter and a photodiode (14.3).

8. Optoelectronic device (1) according to any one of Claims 1 to 7, comprising external waveguides (3) optically coupled to the photonic circuit (14.1) of the photonic interposer (10).

9. Optoelectronic device (1) according to any one of Claims 1 to 8, comprising an encapsulating layer (5) extending over the upper face (10a) of the photonic interposer (10) and coming into contact with the first microelectronic chip (20).

10. Optoelectronic device (1) according to any one of Claims 1 to 9, wherein the photonic interposer (10) has a thickness, between its lower (10b) and upper (10a) faces, of less than or equal to 200 µm.

11. Optoelectronic device (1) according to any one of Claims 1 to 10, comprising a plurality of through-silicon vias (18.1) directly connecting the first upper conductive control portion (11.2) to the first lower conductive control portion (17.2), the first upper conductive control portions (11.2) being connected to the first microelectronic chip (20) by upper interconnect pads (24), and the first lower conductive control portions (17.2) being connected to the second microelectronic chip (30) by lower interconnect pads (36), the upper interconnect pads (24) and the lower interconnect pads (36) being arranged with a pitch less than or equal to 40 µm.

12. Optoelectronic device (1) according to any one of Claims 1 to 11, wherein the second microelectronic chip (30) is joined to the photonic interposer (10) by way of lower interconnect pads (36), the latter being in contact with the second microelectronic chip (30) and the photonic interposer (10).

13. Optoelectronic device (1) according to any one of Claims 1 to 12, wherein the photonic interposer (10) rests on a power supply support (2) by way of power supply pads (6) whose thickness is greater than that of the second microelectronic chip (30).

14. Method for manufacturing an optoelectronic device (1) according to any one of the preceding claims, comprising the following steps:
o providing an SOI substrate (41), comprising a thick silicon layer (12), a dielectric layer (13.2) made of a silicon oxide, and a thin silicon layer (41.1);
o producing an optical layer (14) from the thin layer (41.1);
o producing through-silicon vias (18, 19), in blind openings (42) extending through the optical layer (14), the dielectric layer (13.2), and through part of the thick layer (12);
o producing a lower dielectric layer (15) extending over and in contact with the optical layer (14);
o producing the lower interconnect layer (17) on a lower dielectric layer (15);
o joining a first handle substrate (44) through direct bonding to the lower interconnect layer (17);
o thinning the thick layer (12), so as to open out the through-silicon vias (18, 19);
o producing the upper interconnect layer (11), in conductive portions are in contact with the through-silicon vias (18, 19);
o removing the first handle substrate (44).

15. Manufacturing method according to Claim 14, comprising the following steps:
o before removing the first handle substrate (44), joining the first microelectronic chip (20) to the upper interconnect layer (11), and depositing an encapsulating layer (5) that covers the upper face (10a);
o joining a second handle substrate (46) to a free planar face formed by the first microelectronic chip (20) and the encapsulating layer (5), and removing the first handle substrate (44);
o removing the second handle substrate (46);
o joining the second microelectronic chip (30).
